# EUROPÄISCHE PATENTSCHRIFT

(11) **EP 3 465 027 B1**
(45) Veröffentlichungstag und Bekanntmachung des Hinweises auf die Patenterteilung: **07.08.2019**
(21) Anmeldenummer: 17728185.4
(22) Anmeldetag: 06.06.2017
(51) Int. Cl.: F25B 21/00

(54) **KÜHLVORRICHTUNG UND EIN VERFAHREN ZUM KÜHLEN**
COOLING DEVICE AND A METHOD FOR COOLING
DISPOSITIF DE REFROIDISSEMENT ET PROCÉDÉ DE REFROIDISSEMENT

(30) Priorität: 06.06.2016 DE 102016110385
(43) Veröffentlichungstag der Anmeldung: 10.04.2019
(73) Patentinhaber: Technische Universität Darmstadt, 64289 Darmstadt (DE)
(72) Erfinder: GOTTSCHALL, Tino, 01324 Dresden (DE); SKOKOV, Konstantin P., 64287 Darmstadt (DE); GUTFLEISCH, Oliver, 64287 Darmstadt (DE)
(74) Vertreter: LifeTech IP Spies & Behrndt Patentanwälte PartG mbB
(86) Internationale Anmeldenummer: PCT/EP2017/063642
(87) Internationale Veröffentlichungsnummer: WO 2017/211778

(56) Entgegenhaltungen:
- DE-A1-102006 014 596
- FR-A1- 3 028 927
- US-A1- 2012 273 158
- US-A1- 2016 084 544
- US-B1- 6 367 281
- LLUIS MANOSA ET AL.: "Giant solid-state barocaloric effect in the Ni-Mn-In magnetic shape memory alloy", NATURE MATERIALS, vol. 9, 4 April 2010 (2010-04-04), pages 478-481,

## Beschreibung

Die vorliegende Erfindung bezieht sich auf eine Kühlvorrichtung und ein Verfahren zum Kühlen und insbesondere auf eine Kühlvorrichtung basierend auf einem magnetokalorischen Kühlprinzip durch Nutzung thermischer Hysterese.

### Hintergrund

Auf vielen technischen Gebieten ist es wichtig, möglichst effizient Materialien oder Räume zu kühlen. So verbrauchen beispielsweise Klimaanlagen oder auch Kühlschränke eine beträchtliche Menge an Energie. Daher gibt es ein ständiges Bestreben, die vorhandenen Kühltechnologien zu verbessern bzw. alternative Kühlkonzepte zur Kühlung zu nutzen.

Ein solches Kühlverfahren nutzt den sogenannten magnetokalorischen Effekt (MKE), der auf einer Temperaturänderung eines Materials durch Anlegen eines magnetischen Feldes basiert. Eine Vielzahl von Materialien sind grundsätzlich dafür geeignet. Jedoch brauchen bekannte magnetokalorische Kühlaggregate sehr großdimensionale Magnete zur Erzeugung des nötigen Magnetfeldes, wobei insbesondere Permanentmagnete zum Einsatz kommen. Aus diesem Grund sind existierende Kühlaggregate dieser Art typischerweise um ein Vielfaches größer oder schwerer als herkömmliche Kompressor-basierte Systeme. Hinzu kommen die damit verbundenen, nicht unerheblichen Materialkosten. Daher ist die magnetische Kühlung derzeit mit den konventionellen Kühltechnologien nicht wettbewerbsfähig.

Auf der anderen Seite versprechen magnetische Kühlverfahren eine hohe Effizienz, da in diesen Systemen u.a. keine Kompressoren oder andere hydraulischpneumatische Systeme erforderlich sind, um eine Kühlwirkung zu erreichen.

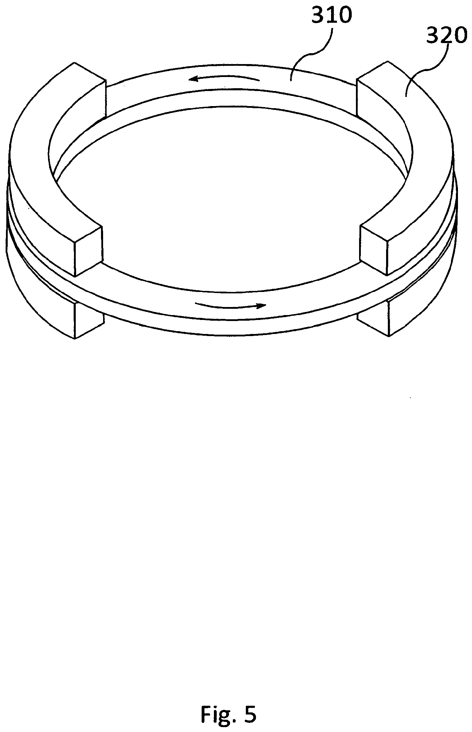

**Fig. 5** veranschaulicht das Wirkprinzip eines bekannten AMR-Gerätes (AMR = aktiver magnetischer Regenerator). Das magnetokalorische Material 310 (MKE-Material), welches unter Anlegen eines Magnetfeldes seine Temperatur ändert, ist in Form eines Rings drehbar zwischen zwei Magneteinheiten 320 angeordnet. Die Magneteinheiten 320 sind bei diesem konventionellen AMR-Geräte in der Regel Permanentmagnete und so dimensioniert, dass das magnetokalorische Material 310 einem ausreichend starken Magnetfeld ausgesetzt ist, um eine signifikante Temperaturänderung des MKE-Materials 310 zu erreichen.

Für eine effiziente Arbeitsweise rotiert das in der Fig. 5 gezeigte MKE-Material 310. Es ist jedoch ebenso möglich, dass die Magneteinheit 320 rotiert. Es gibt zwei Wärmetauschphasen: (1) Abführen von Wärme im Magnetfeld und (2) Aufnahme von Wärme ohne Magnetfeld. Wenn das MKE-Material 310 die Magneteinheiten 320 verlässt, hat sich die Temperatur des MKE-Materials 310 erhöht und die Wärme kann abgeführt werden. Dazu kann beispielsweise ein Austauschfluid durch das ringförmige MKE-Material 310 gepumpt werden. Um den erzielten magnetokalorische Effekt nicht wieder aufzuheben, wird während des gesamten Pumpprozesses das Magnetfeld aufrechterhalten. Erst wenn die Temperatur des MKE-Materials 310 sich der Umgebungstemperatur angeglichen hat, wird das Magnetfeld (bzw. die Magneteinheit 320) entfernt und der umgekehrte magnetokalorische Effekt tritt ein. Da beim magnetokalorischen Effekt eine Erwärmung durch die Magnetisierung erreicht wurde, die unter Nutzung des Austauschfluids an die Umgebung abgegeben werden kann, wird im umgekehrten magnetokalorische Effekt (wenn das Magnetfeld abgeschaltet wird) Kühlung erreicht (die zur Kühlung genutzt werden kann). Je nachdem in welchem Zyklus sich das System befindet, kann das Austauschfluid in verschiedene Richtungen gepumpt werden.

In den konventionellen magnetokalorischen Aggregaten kommen typischerweise Materialien zum Einsatz, die eine hohe Reversibilität aufweisen. Um die hohe Reversibilität und somit eine möglichst verlustarme Kühlung zu ermöglichen, werden in diesen Kühlaggregaten Materialien genutzt, die keine oder eine möglichst kleine thermische Hysterese aufweisen. Materialien mit diesen Eigenschaften wurden ständig weiterentwickelt und umfassen beispielsweise: Gadolinium, La(Fe,Si,Co)₁₃, La(Fe,Si,Mn)₁₃Hₓ oder Fe₂P-Legierungen.

Wie gesagt besteht ein Nachteil dieser Systeme in den großen Permanentmagneten, die erforderlich sind um das starke Magnetfeld möglichst großflächig auf das MKE-Material 310 einwirken zu lassen. Beispielsweise wurde dafür die Hälfte des Volumens des magnetokalorischen Materials 310 dem Magnetfeld ausgesetzt. Die entsprechenden Kühlaggregate sind daher nicht nur schwer, sondern auch mit enormen Kosten verbunden. Dokument DE 10 2006 014596 A1 offenbart eine Kühlvorrichtung unter Nutzung des magnetokalorischen Effekts, bei der sich das magnetokalorische Material durch eine Rotationsbewegung in und aus dem Magnetfeld bewegt und so einer Temperaturänderung unterliegt. Dokument US 2012/273158 A1 offenbart eine Kühlvorrichtung, bei der ein festes Material durch mechanische Belastung und durch die daraus resultierende Volumenänderung eine Temperaturänderung erfährt.

Daher besteht ein Bedarf nach alternativen magnetischen Kühltechnologien, die keine großen Permanentmagnete erfordern und die magnetische Kühlung preiswerter machen.

### Zusammenfassung

Die oben genannten Probleme werden durch eine Kühlvorrichtung nach Anspruch 1 oder ein Verfahren zum Kühlen nach Anspruch 11 überwunden. Die abhängigen Ansprüche beziehen sich auf vorteilhafte Weiterbildungen der Gegenstände der unabhängigen Ansprüche.

Die vorliegende Erfindung bezieht sich auf eine Kühlvorrichtung mit einem magnetokalorischen Material, einer Magnetisierungseinrichtung zum Ausbilden eines äußeren Magnetfeldes und einer Umwandlungseinrichtung zum Ausüben eines Druckes oder einer Spannung auf das magnetokalorische Material. Das magnetokalorische Material ist derart gewählt, dass es seine Temperatur bei einer Änderung eines äußeren Magnetfeldes und bei einer Änderung eines ausgeübten Druckes ändert. Die Kühlvorrichtung umfasst weiter Bewegungsmittel, die ausgebildet sind, um das magnetokalorische Material relativ zu der Magnetisierungseinrichtung und der Umwandlungseinrichtung zu bewegen, so dass das magnetokalorische Material abwechselnd einer Änderung des äußeren Magnetfeldes und einer Änderung des Druckes/der Spannung ausgesetzt ist, um so eine periodische Temperaturänderung im magnetokalorischen Material zu erreichen. Perioden geringerer Temperatur können dann zum Kühlen genutzt werden.

Bei weiteren Ausführungsbeispielen zeigt das magnetokalorische Material eine erste Phase und eine zweite Phase und Phasenübergänge zwischen der ersten Phase und der zweiten Phase sind über eine thermische Hysterese durch eine Änderung des äußeren Magnetfeldes und/oder des Druckes/der Spannung auslösbar. Diese Phasenübergänge sind insbesondere magneto-strukturelle Phasenübergänge erster Ordnung, wo es beim Übergang zu strukturellen Änderungen im magnetokalorische Material kommt (z.B. eine geänderte Kristallstruktur). Die Magnetisierungseinrichtung und die Umwandlungseinrichtung sind daher ausgebildet, um diesen Phasenübergang zwischen der ersten Phase und der zweiten Phase und die damit verbundenen Strukturumwandlungen auszulösen. Dies bedeutet, dass der Druck (oder die Spannung) und das magnetische Feld ausreichend stark geändert werden, um den Umwandlungsprozess und den damit verbundenen Phasenübergang auszulösen, und zwar nach Möglichkeit über einen gesamten Querschnitt des magnetokalorischen Materials. Falls der Druck (oder die Spannung) und/oder das magnetische Feld nicht ausreichen, könnte der Phasenübergang ansonsten nur teilweise in dem magnetokalorischen Material erfolgen (bzw. nur an einer Oberfläche ausgelöst werden).

Die definierte periodische Änderung der Temperatur infolge periodischer Änderung des Magnetfeldes entspricht dem Durchlaufen der thermischen Hysterese. Ausführungsbeispiele der vorliegenden Erfindung nutzen gezielt diese Hysterese aus, da auf diese Weise das Magnetfeld nur für einen kurzen Zeitraum bzw. räumlich lokalisiert aufzubringen ist, ohne dass sofort der Umkehrprozess in Gang gesetzt wird.

Magnetokalorische Materialien können den normalen magnetokalorischen Effekt oder den inversen magnetokalorischen Effekt zeigen. Bei dem normalen magnetokalorischen Effekt steigt die Temperatur beim Ausbilden einer Magnetisierung im Vergleich zu dem nicht-magnetischen Fall, während bei dem inversen magnetokalorischen Material, die Temperatur sinkt, wenn das magnetokalorische Material dem äußeren Magnetfeld ausgesetzt wird. Die Ursache für die Temperaturabsenkung ist die magneto-Strukturumwandlung in dem Material. Obwohl beide Materialien prinzipiell nutzbar sind, wird gemäß weiterer Ausführungsbeispiele ein magnetokalorisches Material mit inversen magnetokalorischen Effekt bevorzugt.

In Ausführungsbeispielen der vorliegenden Erfindung ist die stabile Phase für höhere Temperaturen (Hochtemperaturphase) die magnetisierte Phase, während die Phase, die für niedrigere Temperaturen stabil ist (Niedertemperaturphase), eine Phase mit keiner oder mit einer geringeren Magnetisierung ist.

Bei weiteren Ausführungsbeispielen ist das magnetokalorische Material zumindest abschnittsweise linienförmig (geradlinig) gebildet und die Bewegungsmittel weisen eine Translationsvorrichtung auf, die ausgebildet ist, um das magnetokalorische Material abwechselnd vor- und zurück zu bewegen, um mit der abwechselnden Bewegung periodische Temperaturänderungen des magnetokalorischen Materials zu erreichen.

Bei weiteren Ausführungsbeispielen ist das magnetokalorische Material ringförmig gebildet und die Bewegungsmittel weisen eine Drehvorrichtung auf, die ausgebildet ist, um das ringförmige magnetokalorische Material zu drehen, um eine periodische Temperaturänderung von Segmenten des ringförmigen magnetokalorischen Materials zu erreichen. In diesem Ausführungsbeispiel können die Bewegungsmittel und die Umwandlungseinrichtung eine Einheit bilden. So können beispielsweise Druckrollen genutzt werden, die durch einen Motor angetrieben werden und unter Ausübung eines Druckes das magnetokalorische Material vorwärtsbewegen. Hierbei kann der ausgeübte Druck ausreichend stark gewählt werden, um den Phasenübergang in dem magnetokalorischen Material auszulösen. Der Motor als Bewegungsmittel kann daher das magnetokalorische Material während der Druckausübung bewegen. Optional können sich auch die Magnetisierungseinrichtung und die Umwandlungseinrichtung bewegen und das magnetokalorische Material verbleibt in Ruhe. Häufig ist der erste Fall leichter umsetzbar. Die Drehung kann nur in eine Richtung oder abwechselnd in entgegengesetzten Richtungen erfolgen.

Demgemäß umfasst bei weiteren Ausführungsbeispielen die Magnetisierungseinrichtung zumindest eine Magneteinheit und die Umwandlungseinrichtung zumindest eine Druckrolle, so dass die Bewegungsmittel das magnetokalorische Material abwechselnd durch die zumindest eine Druckrolle und durch die zumindest eine Magneteinheit bewegen. Das magnetokalorische Material kann so während der Bewegung die thermische Hysterese durchlaufen, wobei zumindest eine Druckrolle einen Mindestdruck und die zumindest eine Magneteinheit eine Mindestmagnetfeldstärke auf das magnetokalorische Material ausüben, um die Übergänge zwischen der ersten Phase und der zweiten Phase zu bewirken.

Die Verwendung von Druckrollen bietet den Vorteil, dass sie gleichzeitig einen Halt für das magnetokalorische Material bereitstellen können. Beispielsweise können zwei oder mehr Druckrollen (z.B. symmetrisch) entlang eines ringförmigem magnetokalorischen Materials ausgebildet sein. Die Magnetisierungseinrichtung braucht keinen direkten Kontakt zu dem magnetokalorischen Material zu haben. Beispielsweise bewegt sich das magnetokalorische Material durch einen Spalt zwischen zwei gegenüberliegenden Polschuhen hindurch, zwischen denen ein starkes Magnetfeld ausgebildet ist, welches wieder ausreichend stark ist, um die Hystereseschleife zu durchlaufen.

Bei weiteren Ausführungsbeispielen umfasst die Kühlvorrichtung weiter zumindest ein Austauschfluid, welches thermisch an das magnetokalorische Material koppelt und ausgebildet ist, um Abschnitte des magnetokalorischen Materials mit einer geringeren Temperatur zu erwärmen und Abschnitte mit höheren Temperatur zu kühlen.

Bei weiteren Ausführungsbeispielen ist das Austauschfluid Wasser, das von und zu dem magnetokalorischen Material gepumpt wird. Ein Bereich niedriger Temperatur kann beispielsweise über ein ersten Austauschfluid mit einem zu kühlenden Medium verbunden werden und so Wärme aufnehmen. Andererseits kann ein Bereich erhöhter Temperatur über ein zweites Austauchfluid Wärme an die Umgebung abgeben (z.B. das Äußere eines Kühlschrankes oder bei Klimaanlagen die Umgebung). Für beide Kreisläufe kann beispielsweise Wasser als Austauchfluid genutzt werden.

Bei weiteren Ausführungsbeispielen weist das magnetokalorische Material beispielsweise eines der folgenden Materialien auf: Gd-Si-Ge, La-Fe-Si-Mn-H, Fe-P, Heusler- oder Halb-Heusler-Legierungen, Fe-Rh, Mn-Ga, oder eine Kombination daraus.

Die vorliegende Erfindung bezieht sich auch auf ein Kühlaggregat mit zumindest einer der zuvor definierten Kühlvorrichtungen. Optional können zwei oder mehrere Kühlvorrichtungen vorhanden sein, die seriell miteinander verbunden sind, um so die Temperaturabsenkung zu vervielfachen.

Die vorliegende Erfindung bezieht sich auch auf Verfahren zum Kühlen. Das Verfahren umfasst die folgenden Schritte: Bewegen eines magnetokalorischen Materials; Ausbilden eines äußeren Magnetfeldes; und Ausüben eines Druckes oder einer Spannung auf das magnetokalorische Material. Das magnetokalorische Material ändert durch das äußere Magnetfeld und infolge des ausgeübten Druckes seine Temperatur. Durch die Bewegung wird das magnetokalorische Material abwechselnd dem äußeren Magnetfeld und dem Druck ausgesetzt, so dass eine periodische Temperaturänderung im magnetokalorischen Material erreicht wird, wobei Perioden geringerer Temperatur zum Kühlen nutzbar sind.

Bei weiteren Ausführungsbeispielen umfasst das Anlegen des äußeren Magnetfeldes eine adiabatische Magnetisierung und das Ausüben des Druckes ein Ändern des Druckes (z.B. einen Druckaufbau und/oder einen Druckabbau). Das Verfahren kann optional zumindest einen der folgenden Schritte umfassen: adiabatische Magnetisierung, adiabatischen Entmagnetisierung, Aufnahme von Wärme aus einem Kühlraum, adiabatischen Druckaufbau, adiabatischen Druckabbau und Abgabe von Wärme an eine Umgebung. Bei der adiabatischen Entmagnetisierung braucht sich die Temperatur aufgrund der Hysterese nicht zu ändern.

Die Erfindung ist nicht auf eine bestimmte Reihenfolge der Verfahrensschritte eingeschränkt. Bei weiteren Ausführungsbeispielen können die Verfahrensschritte in einer anderen Reihenfolge ausgeführt werden.

Die beschriebenen Ausführungsbeispiele lösen somit die oben genannte technische Aufgabe dadurch, dass gezielt die thermische Hysterese von magnetokalorischen Materialien mit einem Phasenübergang erster Ordnung in Kombination mit mechanischer Spannung (oder Druck) ausgenutzt wird. Diese Vorgehensweise bietet den Vorteil, dass eine beträchtliche Reduktion an Kosten und Gewicht erreicht werden kann. Dadurch werden die entsprechenden Kühlaggregate im Vergleich zu konventionellen AMR-Geräten deutlich günstiger herzustellen und die Permanentmagneten können bei einer gleichzeitigen Effizienzsteigerung des Kühlkreislaufes drastisch reduziert werden.

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine schematische Darstellung einer Kühlvorrichtung nach einem Ausführungsbeispiel der vorliegenden Erfindung.
- Fig. 2: zeigt eine Temperaturabhängigkeit eines magnetokalorischen Materials in Abhängigkeit des angelegten Feldes.
- Fig. 3: zeigt einen schematischen Aufbau einer hysteresebasierten Kühlvorrichtung, bei der ein magnetokalorisches Material in Form eines Ringes rotierend zwischen zwei Magnet- und Druckeinheiten angeordnet ist.
- Fig. 4: veranschaulicht das schematische Wirkprinzip des hysteresebasierten Kühlkreislaufs gemäß Ausführungsbeispielen.
- Fig. 5: zeigt einen schematischen Aufbau eines konventionellen AMR-Gerätes.

### Detaillierte Beschreibung

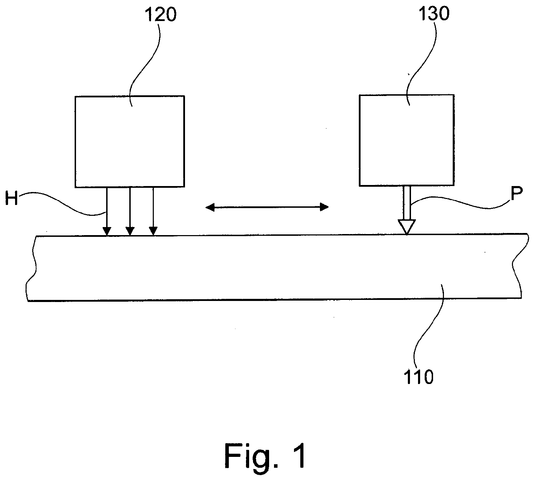

**Fig. 1** zeigt ein Ausführungsbeispiel für eine Kühlvorrichtung mit einem magnetokalorischen Material 110, einer Magnetisierungseinrichtung 120 zum Anlegen eines Magnetfeldes H und einer Umwandlungseinrichtung 130 zum Ausüben eines Druckes P (oder einer Spannung) auf das magnetokalorische Material 110. Außerdem umfasst die Kühlvorrichtung Bewegungsmittel, um das magnetokalorische Material 110 relativ zu der Magnetisierungseinrichtung 120 und/oder zu der Umwandlungseinrichtung 130 zu bewegen, so dass das magnetokalorische Material 110 abwechselnd einer Änderung des äußeren Magnetfeldes H und einer Änderung des Druckes P ausgesetzt ist, um so eine periodische Temperaturänderung im magnetokalorischen Material 110 auszulösen, wobei Phasen geringerer Temperatur zum Kühlen nutzbar sind.

Die Bewegung kann beispielsweise eine abwechselnde Vor- und Rückbewegung sein, die geradlinig verlaufen kann und so zu der gewünschten abwechselnden Änderung der Magnetfeldes H und des Druckes P führt.

Das magnetokalorische Material 110 ist ausgebildet, um beim Anlegen des äußeren Magnetfeldes H und bei Änderung eines ausgeübten Druckes P seine Temperatur zu ändern. Im Gegensatz zu konventionellen Systemen nutzen Ausführungsbeispiele der vorliegenden Erfindung aber gerade keine Materialien, die möglichst keine thermische Hysterese aufweisen, sondern Materialien, mit denen die Hysterese gezielt ausgenutzt werden kann. Außerdem nutzen Ausführungsbeispiele insbesondere inverse magnetokalorische Materialien, die beim Anlegen eines Magnetfeldes sich abkühlen und beim Ausüben eines Druckes oder einer Spannung die Temperatur erhöhen. Dadurch lässt sich auf einfache Weise ein Kühlkreislauf erzielen.

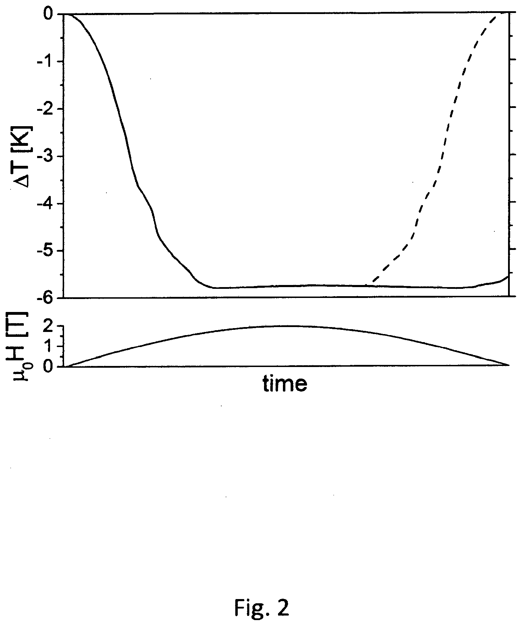

**Fig. 2** zeigt eine Änderung der Temperatur T des beispielhaften inversen magnetokalorischen Materials Ni-Mn-In-Co (als ein Beispiel für eine Heusler Legierung), wenn ein Magnetfeld H von beispielhaft 2 T angelegt und wieder entfernt wird. Unter dem Temperaturverlauf ist der dazugehörige zeitliche Verlauf des Magnetfeldes H dargestellt. In dem gezeigten inversen magnetokalorischen Material 110 wird eine Abkühlung von ca. 6 K beobachtet. Da die Umwandlung unter einer thermischen Hysterese abläuft, bleibt diese Temperaturabsenkung erhalten - selbst wenn das Magnetfeld wieder entfernt wird (durchgezogene Linie auf der rechten Seite der grafischen Darstellung).

Zum Vergleich ist in der Fig. 2 ebenfalls das Temperaturverhalten einer Probe gezeigt, wie sie bei konventionellen AMR-Systemen mit einer vollständigen reversiblen Umwandlung (gestrichelte Linie) genutzt wird. Infolge der Reversibilität erhöht sich die Temperatur bei diesen konventionellen Systemen nach Abschaltung des Magnetfeldes wieder vollständig und der Ausgangszustand wird wieder erreicht.

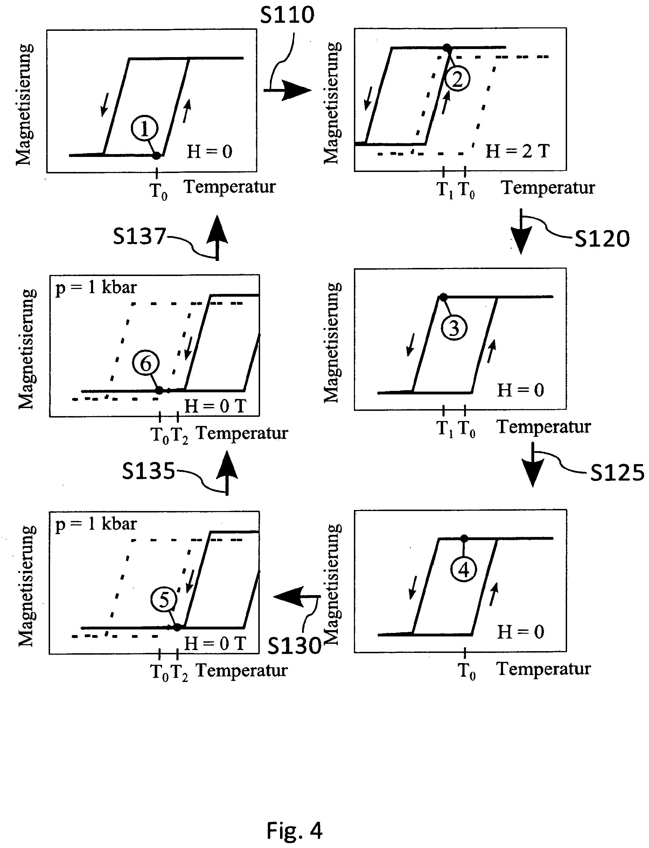

Im Gegensatz zu den konventionellen AMR-Systemen nutzen Ausführungsbeispiele gezielt den Hysterese-Effekt. Dementsprechend ist eine Aufrechterhaltung des Magnetfeldes H während des Pumpprozesses nicht erforderlich. Der magnetokalorische Effekt verläuft in Ausführungsbeispielen irreversibel, d.h. die Magnetisierungskurven verlaufen für die Umwandlungen zwischen den Phasen entlang unterschiedlicher Pfade (siehe Fig. 4 unten).

Die Nutzung der Hysterese bietet den Vorteil, dass das Magnetfeld H nur in einem sehr kleinen Bereich oder Volumen benötigt wird. In diesem Bereich kommt es zu dem Kühleffekt. Daher kann das Magnetfeld sehr stark konzentriert werden und es lassen sich deutlich höhere Magnetfelder erzeugen, als dies beispielsweise bei dem konventionellen AMR-Gerät aus der Fig. 5 möglich ist, wo man ein sehr großes Volumen magnetisieren musste.

Daher brauchen Ausführungsbeispiele keine großen Permanentmagnete und können trotzdem ein deutlich stärkeres Magnetfeld bereitstellen. Da der magnetokalorische Effekt, also die Temperaturänderung mit dem Magnetfeld, mit der Magnetfeldstärke zunimmt, wird dadurch eine Effizienzsteigerung möglich.

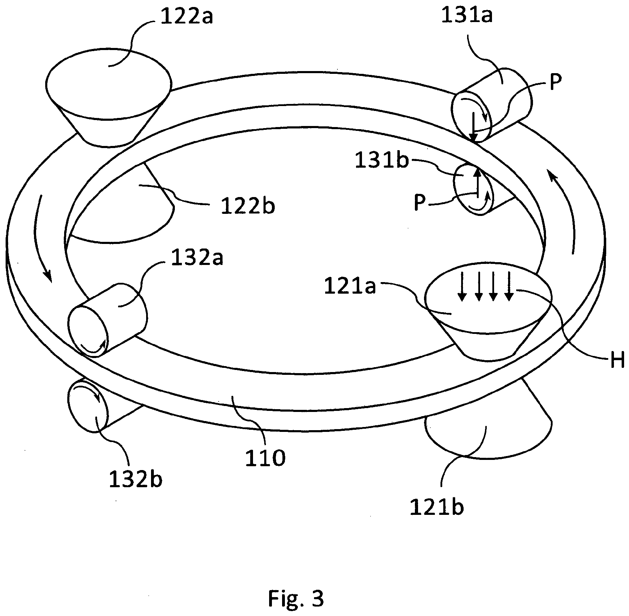

**Fig. 3** zeigt einen schematischen Aufbau eines hysteresenutzenden Kühlapparates, wobei das magnetokalorische Material 110 in Form eines Ringes rotierend zwischen zwei Magneteinheiten 121, 122 (Magnetisierungseinrichtung 120) und zwei Druckeinheiten 131, 132 (Umwandlungseinrichtung 130) angeordnet ist.

Die erste Magneteinheit 121 umfasst einen ersten Magnetschuh 121a und einen zweiten Polschuh 121b, die auf gegenüberliegenden Seiten des magnetokalorischen Materials 110 angeordnet sind und einen Spalt bilden, in dem sich das magnetokalorische Material 110 befindet. Die Polschuhe 121a, 121b konzentrieren das Magnetfeld in dem Spalt, um das magnetokalorische Material 110 mit einer hohen Magnetfeldstärke H zu magnetisieren. Die zweite Magneteinheit 122 kann auch einen ersten Polschuh 122a und einen zweiten Polschuh 122b aufweisen, die ebenso einen Spalt zwischen den Polschuhen 122a, 122b der zweiten Magneteinheit 122 bilden, in dem das magnetokalorische Material 110 sich befindet und dem Magnetfeld H ausgesetzt werden kann. Die erste Magneteinheit 121 und die zweite Magneteinheit 122 können mit einem Permanentmagneten oder einem Elektromagneten verbunden sein, um das erforderliche Magnetfeld in den Spalten zwischen den Polschuhen 122a, 122b, 121a, 121b auszubilden.

Die Umwandlungseinrichtung 130 ist in der Fig. 3 als ein Walzsystem ausgebildet, wobei die erste Druckeinheit 131 eine erste Druckrolle 131a und eine zweite Druckrolle 131b umfasst, die auf zwei gegenüberliegenden Seiten des magnetokalorischen Materials 110 drehbar gelagert sind, um den Druck P auf das magnetokalorische Material 110 auszuüben. Die zweite Druckeinheit 132 umfasst eine erste Druckrolle 132a und eine zweite Druckrolle 132b, die ebenfalls drehbar gelagert auf gegenüberliegenden Seiten des magnetokalorischen Materials 110 angeordnet sind und den Druck P auf das magnetokalorische Material 110 ausüben.

Optional können die Druckrollen 131a, 131b, 132a, 132b durch die Bewegungsmittel (nicht gezeigt) angetrieben werden, um das magnetokalorische Material 110 unter Ausübung des Druckes P zu bewegen (z.B. entgegen dem Uhrzeigesinn, wie es in der Fig. 3 gezeigt ist). Da eine Relativbewegung ausreichend ist, können die Bewegungsmittel auch ausgebildet sein, um die Druckeinheiten 131, 132 und die Magneteinheiten 121,122 zu bewegen, während das magnetokalorische Material 110 festgehalten wird.

Es versteht sich, dass bei weiteren Ausführungsbeispielen mehr als zwei Druckeinheiten 131, 132 und/oder mehr als zwei Magneteinheiten 121, 122 vorhanden sein können und die Erfindung nicht auf eine bestimmte Anzahl beschränkt sein soll. Außerdem können die erste Druckeinheit 131 und die zweite Druckeinheit 132, wie in der Fig. 3 gezeigt, an diametral gegenüberliegend Positionen des ringförmigen magnetokalorischen Materials 110 angeordnet sein. Dadurch kann das magnetokalorische Material 110 gleichzeitig mechanisch gehalten werden.

Im Vergleich zu der konventionellen Anlage aus der Fig. 5 wird so eine deutliche Reduktion der Magnete (bzw. des beispielhaften Permanentmagnetmaterials) möglich. Außerdem können die Polschuhe 121, 122 derart ausgebildet werden, dass eine Fokussierung des Magnetfeldes H erreicht wird. Der Gesamtprozess kann außerdem zyklisch ablaufen, wozu die zwei Walzsysteme 131, 132 genutzt werden, um den Druck P auszuüben und das magnetokalorische Material 110 gleichzeitig in seinen Ausgangszustand (geringe Magnetisierung) zurückzuversetzen. Der zyklische Gesamtprozess ist möglich, da die ablaufende Strukturwandlung während des Phasenüberganges erster Ordnung durch das Aufbringen eines Druckes oder einer mechanischen Spannung induziert werden kann.

**Fig. 4** veranschaulicht das Wirkprinzip des zyklischen Kühlprozesses, der schematisch durch sechs Zustände in dem Magnetisierung-Temperatur-Diagramm veranschaulicht werden kann. Als magnetokalorisches Material ist beispielsweise Ni-Mn-In-Co nutzbar.

Die Magnetisierung-Temperatur-Diagramme zeigen zwei stabile Phasen, eine Tieftemperaturphase und eine Hochtemperaturphase. Die Tieftemperaturphase ist jene Phase, die zu niedrigeren Temperaturen (links von den Hysteresekurven in den Diagrammen) stabil ist, während die Hochtemperaturphase jene Phase ist, die bei hohen Temperaturen (rechts von den Hysteresekurven in den Diagrammen) stabil ist. Der Übergang zwischen den Phasen erfolgt durch die dargestellten Hysteresekurven. Es versteht sich, dass in Abhängigkeit der Vorgeschichte im Bereich der Hysterese die Hochtemperaturphase auch bei Temperaturen vorliegen kann, die tiefer sind als Temperaturen, in denen die Tieftemperaturphase (noch) stabil ist.

Der Prozess startet beispielsweise im Zustand 1 (links oben in der Fig. 4). Das magnetokalorische Material 110 befindet sich hierbei in der Tieftemperaturphase mit einer niedrigen Magnetisierung bei einer Ausgangstemperatur T0.

Durch Anlegen S110 des äußeren Magnetfeldes erfolgt eine adiabatische Magnetisierung und die Hysteresekurve verschiebt sich nach links. Es erfolgt ein Übergang in die Hochtemperaturphase mit hoher Magnetisierung (Zustand 2). Die adiabatische Magnetisierung S110 stellt sicher (es folgt noch kein oder kaum ein Wärmetausch mit der Umgebung), dass die Temperatur bei diesem Phasenübergang fällt. Beispielsweise kann die Temperatur von der Anfangstemperatur T0 durch das Anlegen des Magnetfeldes auf eine Temperatur T1 gesenkt werden. Da sich die Kurve nach links verschoben hat, ist das magnetokalorische Material 110 trotzdem in der Hochtemperaturphase, auch wenn die Temperatur in dem magnetokalorischen Material 110 infolge des inversen MKE sich verringert hat.

Aufgrund der thermischen Hysterese findet die Rückumwandlung in die Tieftemperaturphase nicht von selbst statt - selbst dann nicht, wenn das äußere Magnetfeld H abgeschaltet wird und eine adiabatische Entmagnetisierung S120 folgt S120. Dies ist in dem Zustand 3 der Fall, wo die Temperatur dementsprechend auf dem Wert T1 verbleibt. In der Fig. 3 kommt es zu dieser adiabatischen Entmagnetisierung S120, wenn das magnetokalorische Material 110 den Spalt zwischen den Polschuhen 121, 122 verlässt. Es versteht sich, dass die Entmagnetisierung sich auf das äußere Magnetfeld bezieht. Das magnetokalorische Material 110 kann natürlich auch nach Abschalten des äußeren Magnetfeldes noch weiterhin magnetisiert sein.

Die adiabatischen Zustandsänderungen selbst erfolgen ohne Wärmetausch mit der Umgebung. Erst im nächsten Schritt S125 wird beispielsweise ein Austauschfluid durch das kalte magnetokalorische Material 110 gepumpt und zum Kühlen eines Kühlraumes (d.h. für eine Wärmeaufnahme) genutzt. Daher steigt die Temperatur des magnetokalorischen Materials 110 vom Zustand 3 zu dem Zustand 4 wieder an und erreicht beim Zustand 4 (rechts unten in der Fig. 4 zu sehen) beispielsweise wieder die Ausgangstemperatur T0. Es ist jedoch nicht zwingend, dass beim Zustand 4 die Ausgangstemperatur T0 wieder erreicht wird.

Das magnetokalorische Material 110 befindet sich beim Zustand 4 immer noch in der Hochtemperaturphase (oberen Ast der Hysteresekurve). Um das magnetokalorische Material 110 zurück in die Tieftemperaturphase zu überführen, wird anschließend der Druck P (z.B. von ca. 1 kbar) im Schritt S130 angelegt. Der Druckaufbau verschiebt die Hysteresekurve nach rechts (siehe beide Darstellungen unten in der Fig. 4). Diese Rückumwandlung führt zu einer gewissen Erwärmung, so dass das magnetokalorische Material 110 an dem resultierenden Zustand 5 (links unten in Fig. 4) die Temperatur T2 > T0 aufweist.

Die überschüssige Wärme kann im anschließenden Schritt S135 durch das Austauschfluid abgeführt (z.B. unter Nutzung entsprechender Pumpen) und an die Umgebung abgegeben werden. Damit wird der Zustand 6 erreicht.

Im letzten Schritt S137 wird der Druck P abgebaut und das Material befindet sich wieder in der Tieftemperaturphase bei der Anfangstemperatur T0 (Zustand 1).

Die beschriebenen Schritte können zumindest teilweise zeitlich überlappend, parallel ausgeführt werden bzw. ablaufen - sie brauchen nicht zeitlich voneinander getrennt sein.

Dieser zyklische Prozess kann fortlaufend ausgeführt werden, währenddessen sich das magnetokalorische Material 110 beispielhaft im Kreis bewegt (siehe Fig. 3) und das Austauschfluid Wärme wegtransportiert bzw. zu dem magnetokalorischen Material 110 hin transportiert (z.B. aus dem zu kühlenden Medium). Das Austauchfluid ist nicht gezeigt und kann beispielsweise Wasser sein.

Das gesamte magnetokalorische Material 110 durchläuft daher einen einzigen Brayton-artigen thermodynamischen Zyklus und trägt zur Kühlung bei. Da bei dem konventionellen AMR-Zyklus ein Temperaturgradient aufgebaut wird und der Phasenübergang sofort reversibel nach Abschalten des Magnetfeldes beginnt, kann nur ein kleiner Teil des magnetokalorischen Materials tatsächlich zur Kühlung beitragen. Bei den konventionellen Anlagen sind daher kaum größere Temperaturspannen erreichbar oder nur auf Kosten der Kühlleistung, da nur ein kleiner Teil des MKE-Materials für die Kühlung des Innenraumes sorgt. Im Gegensatz dazu wird bei Ausführungsbeispielen der vorliegenden Erfindung die zu erreichende Temperaturspanne durch die Temperaturänderung des magnetokalorischen Materials 110 im Magnetfeld H bestimmt. Da im hysteresenutzenden Kreislauf deutlich höhere Magnetfelder als in herkömmlichen AMR-Geräten möglich sind, steht eine größere Temperaturänderung zur Verfügung. Außerdem trägt bei der vorliegenden Erfindung das gesamte MKE-Material zur Kühlung bei. Dadurch erreichen Ausführungsbeispiele eine deutlich höhere Effizienz bei der Kühlung.

In einem Magnetfeld H von beispielweise 2 T können in Heusler-Legierungen Temperaturänderungen von 8 K erzielt werden. Dementsprechend können Kühlaggregate mit bereits zwei Modulen, die seriell hintereinander geschaltet sind und bei unterschiedlichen Arbeitstemperaturen arbeiten, eine Temperaturabsenkung von beispielsweise 16 K erreichen. Dies würde beispielsweise ausreichen, um eine einfache Kühleinheit zu konstruieren, die Lebensmittel von Raumtemperatur auf deutlich unter 10°C kühlen kann.

Außerdem weisen Ausführungsbeispiele der vorliegenden Erfindung den Vorteil auf, dass deren Wirkungsgrad deutlich höher ist als bei herkömmlichen AMR-Systemen, da in solchen bimodularen Geräten die Hälfte des magnetokalorischen Materials aktiv an der Kühlung des Kühlraumes beteiligt ist.

Solange eine manipulierbare thermische Hysterese und/oder eine einstellbare Umwandlungstemperatur vorliegt, ist grundsätzlich jedes magnetokalorische Material für die hysteresenutzende magnetische Kühlung geeignet. Dies gilt beispielsweise für alle Materialien mit einer magnetostrukturellen Phasenumwandlung erster Ordnung, wozu beispielhaft die folgenden Materialien gehören: Gd-Si-Ge, La-Fe-Si-Mn-H, Fe-P, Heusler- oder Halb-Heusler-Legierungen, Fe-Rh, Mn-Ga. Hervorzuheben sind die inverse magnetokalorische Materialien wie beispielsweise Mn-Ga, Fe-Rh und insbesondere die Heusler-Legierungen, da diese beim Anlegen eines Magnetfeldes sich abkühlen und es daher aus technischen Gründen einfacher ist, die so gewonnene Kälte zu nutzen, während sie sich bei konventionellen magnetokalorischen Materialien beim Magnetisieren erwärmen.

### Bezugszeichenliste

- 110: magnetokalorisches Material
- 120: Magnetisierungseinrichtung
- 121, 222: Magneteinheiten (Poleschuhe)
- 130: Umwandlungseinrichtung
- 131, 132: Druckrollen
- 310: konventionelles magnetokalorisches Material
- 320: konventionelle Magnetisierungseinrichtung

## Patentansprüche

1. Kühlvorrichtung mit:
einem magnetokalorischen Material (110), das bei einer Änderung eines äußeren Magnetfeldes (H) seine Temperatur (T) ändert und bei einer Änderung eines ausgeübten Druckes (P) oder einer Spannung seine Temperatur ändert;
einer Magnetisierungseinrichtung (120) zum Ausbilden des äußeren Magnetfeldes (H);
einer Umwandlungseinrichtung (130) zum Ausüben des Druckes (P) oder der Spannung auf das magnetokalorische Material (110);
Bewegungsmitteln, die ausgebildet sind, um das magnetokalorische Material (110) relativ zu der Magnetisierungseinrichtung (120) und der Umwandlungseinrichtung (130) zu bewegen, so dass das magnetokalorische Material (110) abwechselnd dem äußeren Magnetfeld (H) und der Änderung des Druckes (P) oder der Spannung ausgesetzt ist, um so eine periodische Temperaturänderung im magnetokalorischen Material (110) zu erreichen, wobei Perioden geringerer Temperatur zum Kühlen nutzbar sind.

2. Kühlvorrichtung nach Anspruch 1, wobei das magnetokalorische Material (110) eine erste Phase und eine zweite Phase aufweist und ein magnetostruktureller Phasenübergang erster Ordnung zwischen der ersten Phase und der zweiten Phase über eine thermische Hysterese durch eine Änderung des äußeren Magnetfeldes (H) und/oder des Druckes (P) oder der Spannung auslösbar sind, und
wobei die Magnetisierungseinrichtung (120) und die Umwandlungseinrichtung (130) ausgebildet sind, um strukturelle Umwandlungen beim Phasenübergang zwischen der ersten Phase und der zweiten Phase zu bewirken.

3. Kühlvorrichtung nach Anspruch 2, wobei das magnetokalorisches Material (110) einen inversen magnetokalorischen Effekt zeigt.

4. Kühlvorrichtung nach einem der vorhergehenden Ansprüche, wobei das magnetokalorische Material (110) ringförmig gebildet ist und die Bewegungsmittel eine Drehvorrichtung aufweisen, die ausgebildet ist, um das ringförmige magnetokalorische Material (110) zu drehen, um mit der Drehbewegung periodische Temperaturänderungen von Segmenten des ringförmigen magnetokalorischen Materials (110) zu erreichen.

5. Kühlvorrichtung nach einem der Ansprüche 2 bis 4,
wobei die Magnetisierungseinrichtung (120) zumindest eine Magneteinheit (121, 122) und die Umwandlungseinrichtung (130) zumindest eine Druckrolle (131, 132) aufweisen, so dass die Bewegungsmittel das magnetokalorische Material (110) abwechselnd durch die zumindest eine Druckrolle (131, 132) und durch die zumindest eine Magneteinheit (121, 122) bewegt und das magnetokalorische Material (110) während der Bewegung die thermische Hysterese durchläuft,
und wobei die zumindest eine Druckrolle (131, 132) einen Mindestdruck (P) und die zumindest eine Magneteinheit (121, 122) eine Mindestmagnetfeldstärke (H) auf das magnetokalorische Material (110) ausüben, um Übergänge zwischen der ersten Phase und der zweiten Phase über einem gesamten Querschnitt des magnetokalorischen Materials (110) zu bewirken.

6. Kühlvorrichtung nach einem der Ansprüche 1 bis 3, wobei das magnetokalorische Material (110) zumindest abschnittsweise linienförmig gebildet ist und die Bewegungsmittel eine Translationsvorrichtung aufweisen, die ausgebildet ist, um das magnetokalorische Material (110) abwechselnd vor- und zurück zu bewegen, um mit der abwechselnden Bewegung periodische Temperaturänderungen des magnetokalorischen Materials (110) zu erreichen.

7. Kühlvorrichtung nach einem der vorhergehenden Ansprüche, die weiter zumindest ein Austauschfluid aufweist, welches thermisch an das magnetokalorische Material (110) koppelt und ausgebildet ist, um Abschnitte des magnetokalorischen Materials (110) mit einer geringeren Temperatur zu erwärmen und Abschnitte mit höheren Temperatur zu kühlen.

8. Kühlvorrichtung nach Anspruch 7, wobei das Austauschfluid Wasser aufweist, die Kühlvorrichtung weiter eine Pumpe aufweist, um das Wasser von und zu dem magnetokalorischen Material (110) zu pumpen.

9. Kühlvorrichtung nach einem der vorhergehenden Ansprüche, wobei das magnetokalorische Material (110) zumindest eines aus den folgenden Materialien umfasst: Gd-Si-Ge, La-Fe-Si-Mn-H, Fe-P, Heusler- oder Halb-Heusler-Legierungen, Fe-Rh, Mn-Ga.

10. Kühlaggregat mit zumindest einer Kühlvorrichtung nach einem der Ansprüche 1 bis 9.

11. Kühlaggregat nach Anspruch 10, wobei die zumindest eine Kühlvorrichtung zwei Kühlvorrichtungen mit unterschiedliche Arbeitstemperaturen umfasst, die seriell miteinander verbunden sind, um eine erreichbaren Temperaturabsenkung zu vergrößern.

12. Verfahren zum Kühlen mit:
Bewegen eines magnetokalorischen Materials (110), das bei einer Änderung eines äußeren Magnetfeldes (H) seine Temperatur (T) ändert und bei einer Änderung eines ausgeübten Druckes (P) oder Spannung seine Temperatur ändert;
Ausbilden (S110) des äußeren Magnetfeldes (H);
Ausüben (S130) des Druckes (P) oder der Spannung auf das magnetokalorische Material (110),
so dass das magnetokalorische Material (110) abwechselnd einer Änderung des äußeren Magnetfeldes (H) und einer Änderung des Druckes (P) oder der Spannung ausgesetzt wird, um so eine periodische Temperaturänderung im magnetokalorischen Material (110) zu erreichen, wobei Perioden geringerer Temperatur zum Kühlen nutzbar sind.

13. Verfahren nach Anspruch 12,
wobei der Schritt (S110) des Ausbildens des äußeren Magnetfeldes (H) eine adiabatische Magnetisierung und der Schritt (S130) des Ausübens des Druckes einen Druckaufbau und einen Druckabbau umfasst,
und das Verfahren weiter folgende Schritte umfasst:
adiabatischen Entmagnetisierung (S120);
Aufnahme (S125) von Wärme aus einem Kühlraum; und
Abgabe (S135) von Wärme an eine Umgebung.

## Claims

1. A cooling device, comprising:
a magnetocaloric material (110) whose temperature (T) changes when an external magnetic field (H) changes, and whose temperature changes when an applied pressure (P) or a stress changes;
a magnetization device (120) for forming the external magnetic field (H);
a conversion device (130) for applying the pressure (P) or the stress to the magnetocaloric material (110);
movement means that are designed to move the magnetocaloric material (110) relative to the magnetization device (120) and the conversion device (130), so that the magnetocaloric material (110) is exposed in alternation to the external magnetic field (H) and to the change in the pressure (P) or the stress in order to achieve a periodic change in temperature of the magnetocaloric material (110), wherein periods of reduced temperature are usable for cooling.

2. The cooling device according to Claim 1, wherein the magnetocaloric material (110) has a first phase and a second phase, and a first-order magnetostructural phase transition between the first phase and the second phase via thermal hysteresis may be initiated by a change in the external magnetic field (H) and/or in the pressure (P) or the stress, and
wherein the magnetization device (120) and the conversion device (130) are designed to bring about structural transformations during the phase transition between the first phase and the second phase.

3. The cooling device according to Claim 2, wherein the magnetocaloric material (110) shows an inverse magnetocaloric effect.

4. The cooling device according to one of the preceding claims, wherein the magnetocaloric material (110) is ring-shaped, and the movement means have a rotation device that is designed to rotate the ring-shaped magnetocaloric material (110) in order to achieve periodic changes in temperature of segments of the ring-shaped magnetocaloric material (110) via the rotational movement.

5. The cooling device according to one of Claims 2 to 4,
wherein the magnetization device (120) has at least at least one magnet unit (121, 122) and the conversion device (130) has at least one pressure roller (131, 132), so that the movement means move the magnetocaloric material (110) in alternation by means of the at least one pressure roller (131, 132) and the at least one magnet unit (121, 122), and the magnetocaloric material (110) undergoes the thermal hysteresis during the movement,
and wherein the at least one pressure roller (131, 132) exerts a minimum pressure (P) and the at least one magnet unit (121, 122) exerts a minimum magnetic field strength (H) on the magnetocaloric material (110) in order to bring about transitions between the first phase and the second phase over an entire cross section of the magnetocaloric material (110).

6. The cooling device according to one of Claims 1 to 3, wherein the magnetocaloric material (110) is linear, at least in sections, and the movement means have a translation device that is designed to move the magnetocaloric material (110) back and forth in alternation in order to achieve periodic changes in temperature of the magnetocaloric material (110) via the alternating movement.

7. The cooling device according to one of the preceding claims, further having at least one exchange fluid that is thermally coupled to the magnetocaloric material (110) and is designed to heat sections of the magnetocaloric material (110) having a lower temperature and to cool sections having a higher temperature.

8. The cooling device according to Claim 7, wherein the replacement fluid contains water, and the cooling device also has a pump for pumping the water from and to the magnetocaloric material (110).

9. The cooling device according to one of the preceding claims, wherein the magnetocaloric material (110) includes at least one of the following materials: Gd-Si-Ge, La-Fe-Si-Mn-H, Fe-P, Heusler alloys or semi-Heusler alloys, Fe-Rh, Mn-Ga.

10. A cooling unit having at least one cooling device according to one of Claims 1 to 9.

11. The cooling unit according to Claim 10, wherein the at least one cooling device includes two cooling devices that have different working temperatures, and that are connected to one another in series to increase an achievable temperature reduction.

12. A method for cooling, comprising:
moving a magnetocaloric material (110) whose temperature (T) changes when an external magnetic field (H) changes, and whose temperature changes when an applied pressure (P) or stress changes;
forming (S110) the external magnetic field (H);
applying (S130) the pressure (P) or the stress to the magnetocaloric material (110),
so that the magnetocaloric material (110) is exposed to a change in the external magnetic field (H) and to a change in the pressure (P) or the stress in alternation in order to achieve a periodic change in temperature of the magnetocaloric material (110), wherein periods of reduced temperature are usable for cooling.

13. The method according to Claim 12,
wherein the step (S110) of forming the external magnetic field (H) includes adiabatic magnetization, and the step (S130) of applying the pressure includes pressure buildup and pressure reduction,
and the method further comprises the following steps:
adiabatic demagnetization (S120);
absorption (S125) of heat from a cooling chamber; and
release (S135) of heat to the surroundings.

## Revendications

1. Dispositif de refroidissement comprenant :
un matériau magnétocalorique (110) dont la température (T) varie lorsqu'un champ magnétique externe (H) varie et dont la température varie lorsqu'une pression appliquée (P) ou une tension varie ;
un moyen de magnétisation (120) destiné former le champ magnétique externe (H) ;
un moyen de transformation (130) destiné à appliquer la pression (P) ou la tension sur le matériau magnétocalorique (110) ;
des moyens de déplacement conçus pour déplacer le matériau magnétocalorique (110) par rapport au moyen de magnétisation (120) et au moyen de transformation (130) de sorte que le matériau magnétocalorique (110) soit exposé alternativement au champ magnétique externe (H) et à la variation de la pression (P) ou de la tension afin d'obtenir une variation périodique de température dans le matériau magnétocalorique (110), les périodes de faible température pouvant être utilisées pour le refroidissement.

2. Dispositif de refroidissement selon la revendication 1, le matériau magnétocalorique (110) comportant une première phase et une deuxième phase, et une transition de phase magnéto-structurale du premier ordre entre la première phase et la deuxième phase par via une hystérésis thermique peut être déclenchée par variation du champ magnétique externe (H) et/ou de la pression (P) ou de la tension, et
le moyen de magnétisation (120) et le moyen de transformation (130) étant conçus pour provoquer des transformations structurelles pendant la transition de phase entre la première phase et la deuxième phase.

3. Dispositif de refroidissement selon la revendication 2, le matériau magnétocalorique (110) présentant un effet magnétocalorique inverse.

4. Dispositif de refroidissement selon l'une des revendications précédentes, le matériau magnétocalorique (110) étant annulaire et les moyens de déplacement comportant un dispositif de rotation conçu pour faire tourner le matériau magnétocalorique annulaire (110) afin d'obtenir des variations de température périodiques de segments du matériau magnétocalorique annulaire (110) conjointement avec le mouvement de rotation.

5. Dispositif de refroidissement selon l'une des revendications 2 à 4,
le dispositif de magnétisation (120) comportant au moins une unité magnétique (121, 122) et le moyen de transformation (130) comportant au moins un rouleau de pression (131, 132) de sorte que les moyens de déplacement déplacent le matériau magnétocalorique (110) alternativement au moyen d'au moins un rouleau de pression (131, 132) et d'au moins une unité magnétique (121, 122) et le matériau magnétocalorique (110) subit l'hystérésis thermique pendant le mouvement,
et l'au moins un rouleau de pression (131, 132) exerce une pression minimale (P) et l'au moins une unité magnétique (121, 122) exerce une intensité de champ magnétique minimale (H) sur le matériau magnétocalorique (110) afin de provoquer des transitions entre la première phase et la deuxième phase sur toute une section du matériau magnétocalorique (110).

6. Dispositif de refroidissement selon l'une des revendications 1 à 3, le matériau magnétocalorique (110) étant de forme linéaire, au moins par endroits, et les moyens de déplacement comportant un dispositif de translation conçu pour déplacer le matériau magnétocalorique (110) alternativement vers l'avant et vers l'arrière afin d'obtenir des variation de température périodiques du matériau magnétocalorique (110) conjointement avec le mouvement alternatif.

7. Dispositif de refroidissement selon l'une des revendications précédentes, comportant en outre au moins un fluide d'échange couplé thermiquement au matériau magnétocalorique (110) et conçu pour chauffer des parties du matériau magnétocalorique (110) ayant une température plus faible et refroidir des parties ayant une température plus élevée.

8. Dispositif de refroidissement selon la revendication 7, le fluide d'échange contenant de l'eau, et le dispositif de refroidissement comportant en outre une pompe pour pomper l'eau depuis et vers le matériau magnétocalorique (110).

9. Dispositif de refroidissement selon l'une des revendications précédentes, le matériau magnétocalorique (110) comprenant au moins l'un des matériaux suivants : Gd-Si-Ge, La-Fe-Si-Mn-H, Fe-P, alliages Heusler ou semi-Heusler, Fe-Rh, Mn-Ga.

10. Unité de refroidissement comprenant au moins un dispositif de refroidissement selon l'une des revendications 1 à 9.

11. Unité de refroidissement selon la revendication 10, l'au moins un dispositif de refroidissement comprenant deux dispositifs de refroidissement, ayant des températures de travail différentes, qui sont reliés entre eux en série pour augmenter l'abaissement de température pouvant être atteint.

12. Procédé de refroidissement comprenant les étapes suivantes :
déplacer un matériau magnétocalorique (110) dont la température (T) varie lorsqu'un champ magnétique externe (H) varie et dont la température varie lorsqu'une pression ou une tension appliquée (P) varie ;
former (S110) le champ magnétique externe (H) ;
appliquer (S130) la pression (P) ou la tension sur le matériau magnétocalorique (110),
de sorte que le matériau magnétocalorique (110) soit exposé alternativement à une variation du champ magnétique externe (H) et à une variation de la pression (P) ou de la tension afin d'obtenir une variation périodique de température dans le matériau magnétocalorique (110), les périodes de température plus faible pouvant être utilisées pour le refroidissement.

13. Procédé selon la revendication 12,
l'étape (S110) de formation du champ magnétique externe (H) comprenant une magnétisation adiabatique, et l'étape (S130) d'application de la pression comprenant une augmentation de pression et une diminution de pression,
et le procédé comprenant en outre les étapes suivantes :
la démagnétisation adiabatique (S120) ;
l'absorption (S125) de chaleur de puis une chambre de refroidissement ; et
le dégagement (S135) de chaleur dans un environnement.
